(19) Europäisches Patentamt
European Patent Office
Office européen des brevets

(11) Publication number: **0 155 968**
**A1**

(12) # EUROPEAN PATENT APPLICATION

published in accordance with Art. 158(3) EPC

(21) Application number: 84903194.3

(22) Date of filing: 24.08.84

Data of the international application taken as a basis:

(86) International application number: PCT/JP84/00406

(87) International publication number: WO85/01122 (14.03.85 85/07)

(51) Int. Cl.⁴: G 02 B 27/18

(30) Priority: 25.08.83 JP 155293/83

(43) Date of publication of application: 02.10.85 Bulletin 85/40

(84) Designated Contracting States: CH DE FR GB LI NL SE

(71) Applicant: NEGISHI, Masataka
29-19, Daito 2-chome Urawa-Shi
Saitama 336(JP)

(72) Inventor: NEGISHI, Masataka
29-19, Daito 2-chome Urawa-Shi
Saitama 336(JP)

(74) Representative: Pendlebury, Anthony
Page, White & Farrer 5 Plough Place New Fetter Lane
London EC4A 1HY(GB)

(54) **LIGHT CONTROLLING APPARATUS.**

(57) In a light projector employing a lens (L), if the angle made between an optical axis (0–0) and the light ray passing through the lens (L) is represented by $\theta$, the iluminance at a projection surface (20) is proportional to $\cos^4\theta$. Therefore, in order to obtain a uniform illuminance distribution at the projection surface, for example, a non-spherical reflecting mirror (11) is inserted into the lens system as a light-quantity distribution adjusting means which allows the light from a light source (10) to be projected at a light-quantity distribution which provides a reciprocal of $\cos^4\theta$.

FIG. 2

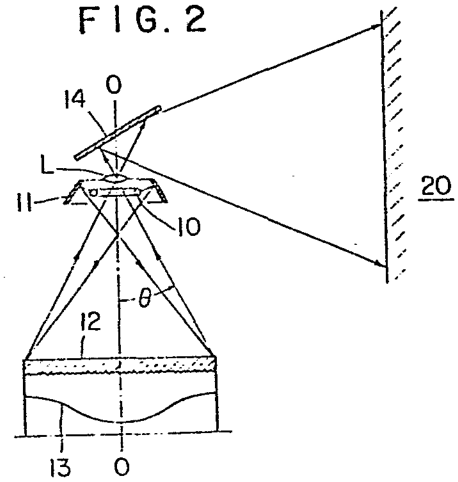


EP 0 155 968 A1

TECHNICAL FIELD

The present invention relates to a light control device which can be used for a slide projector, movie projector, stroboscope, etc.

BACKGROUND ART

A light projection device using a lens has a characteristic such that a light image, projected through the lens is most bright at the center of its projection surface and becomes gradually darker toward the periphery. That is, as will be described in detail later, in the case where the light coming from a plane light source having uniform brightness throughout its entire surface is projected onto a projection surface through the lens, the center of the projection surface is the brightest and the surface becomes darker toward its periphery. This is an unavoidable phenomenon in lens characteristics. The intensity of illumination on the projection surface, in the case where the angle of a light ray relative to the optical axis is denoted by θ, is expressed by

$$k \cdot \cos^4\theta$$

The larger the angle θ is, the smaller is the intensity of illumination in the area on the projection surface corresponding to the angle θ. Here, k is a constant. In any event, insufficiency in the quantity of light in the peripheral area of the projection surface could not be avoided in conventional light projection devices.

Accordingly, the present invention aims at providing a light control device which has no insufficiency in the quantity of light in the peripheral area, and which can obtain a uniform distribution of intensity of illumination on the projection surface.

DISCLOSURE OF THE INVENTION

The light control device according to the present

invention is characterized in that it has light ray distribution adjustment means which is inserted into the lens system so as to produce a light ray distribution which is approximately the reciprocal of $\cos^4\theta$ in the case where the angle between the lens optical axis and the light ray passed through the lens is denoted by θ.

BRIEF DESCRIPTION OF THE DRAWING

FIG. 1 is a diagrammatic view explanatory of lens characteristics;

FIG. 2 is a diagrammatic view showing one example of practice of the present invention; and

FIG. 3 and FIG. 4 are also diagrammatic views showing respectively two other different examples of practice of the present invention.

BEST MODES FOR CARRYING OUT THE INVENTION

Prior to describing examples of practice of the present invention, the conventional light projection device mentioned hereinbefore will be described with reference to FIG. 1. In the case where the light coming from a plane light source 1 having uniform brightness throughout its entire surface is projected onto a projection surface 2 through a lens L, the center of the projection surface 2 is most bright and the surface becomes darker toward its periphery. This is an unavoidable phenomenon because of lens characteristics. The intensity of illumination on the projection surface 2, in the case where the angle of a light ray relative to the optical axis is denoted by θ, is given by

$$k \cdot \cos^4\theta$$

where k is a constant.

The larger the angle θ is, the smaller is intensity of illumination in the area corresponding to the angle θ.

An example of practice of the present invention to solve such problems will now be described.

FIG. 2 shows an overhead projector as one example to which the light control device of the present invention is applied. In this figure, 10 denotes a ring-shaped light source having an optical axis O-O, and in coaxial state with this light source 10, a ring-shaped non-spherical mirror 11 is provided as a light ray distribution adjustment means. Furthermore, above the light source 10, a lens L is provided coaxially therewith. Below the light source 10 and the mirror 11 is provided a transparent Fresnel reflection plate 12. The Fresnel reflection plate 12 is formed with a planar upper surface and a lower surface which is a Fresnel surface having numberless parallel minute projections of saw-toothed cross section. This lower surface is applied with a light reflecting film.

The mirror 11 functions to receive the light from the light source 10 and to reflect it toward the Fresnel reflection plate 12. Light rays reflected by the mirror 11 cross the optical axis O-O and are directed toward the opposite side with respect to the axis O-O as shown in the figure. The mirror 11 is designed to have such a shape that more light rays reach the peripheral area of the Fresnel reflection plate 12 than the central part thereof, and, more specifically, the intensity of illumination on the surface of the Fresnel reflection plate 12 changes as shown by curve 13.

The light rays directed to the Fresnel reflection plate 12 enter into the reflection plate, are reflected by the film on the Fresnel surface at the lower side, and are directed upwards through the lens L, impinging upon a plane mirror 14 to be reflected again there so as to be projected onto a projection surface 20. Here, in the case where the angle between the incident light ray entering the lens L and the optical axis is denoted by $\theta$, the curve 13 is so determined that the intensity of illumination on the

surface of the Fresnel reflection plate 12 is the reciprocal of $\cos^4\theta$. The shape of the non-spherical surface mirror 11 to produce such distribution of intensity of illumination, i.e., such distribution of quantity of light rays, can be designed by a computer on the basis of analytical equations.

When light rays having such a distribution pass through the lens L, a light ray distribution variation of $k\cdot\cos^4\theta$ occurs through the lens L as a result of the lens characteristic before-mentioned. However, since the light ray distribution of the reciprocal of $\cos^4\theta$ has been imparted in advance to the incident light rays entering the lens L, the light rays after passing through the lens L come to have a uniform distribution as a result of the superposition thereof. Accordingly, the light rays reaching the projection surface 20 are uniformly distributed, and the problem of insufficiency in the quantity of light in the peripheral area is solved.

The phenomenon that the quantity of light is not sufficient in the peripheral area causes a problem especially in the case where the angle $\theta$ before-mentioned is great, that is, in the case where the lens magnification is high (the focal length is short). In such a case, the peripheral area becomes particularly dark so that a high-magnification lens cannot be used. In the case of the present invention, however, the light quantity distribution is uniform so that the use of a high-magnification, short-focal length lens can be allowed, whereby it becomes possible to reduce the size of the lens system.

Further, by the coaxial arrangement of the light source 10, the mirror 11, the Fresnel projection plate 12, and the lens L as shown in the figure, occurrence of optical displacement of the center can be avoided, whereby occurrence of distortion of the picture or image and unevenness of brightness, which have appeared

in conventional projectors, can be prevented. In conventional projectors, surface reflection occurring on the planar surface of the Fresnel reflection plate caused a phenomenon of the central part of the projection surface becoming whitish. This phenomenon can be avoided by the present invention.

FIG. 3 shows an example in which the principle of the present invention is utilized in an illumination system having an image formation system of a slide projector or the like. In this example, light of a light source 10a behind a lens L is reflected by a non-spherical surface reflection mirror 11a and then reaches the lens L. In this example also, the distribution of the incident light rays entering the lens L is caused to become the reciprocal of $\cos^4\theta$ by the non-spherical surface reflection mirror 11a which functions as a light ray distribution adjustment means. As a result, the light rays after passing through the lens are uniformly distributed, so that the projected image acquires a uniform distribution of intensity of illumination.

In either of the examples of practice described above, the light source is covered by a suitable shield or the light is caused to be reflected by a suitable reflecting mirror back to the aforementioned non-spherical surface mirror so that the light of the light source 10 or 10a cannot reach directly the Fresnel reflection plate 12 or the lens L. In practice, the latter is preferable.

FIG. 4 shows an example utilizing the principle of the present invention in a stroboscope. In this example also, a non-spherical surface mirror 11b is provided behind a light source 10b. If the object to be photographed is a projection surface 20, for example, this non-spherical surface mirror 11b is formed into a shape such that the light quantity distribution on the projection surface 20 becomes the reciprocal of $\cos^4\theta$.

In this connection, although the optical axis $O_1$-$O_1$ of the camera C and the optical axis of the stroboscope do not coincide or are mutually offset, this positional offset usually does not cause any substantial effect on the desired light quantity distribution on the object to be photographed with respect to the optical axis of the camera because the distance between the camera and the object and that between the stroboscope and the object are considerably long relative to the offset distance of the optical axes. When an object is photographed with a camera in the above manner, light which is not accompanied by the problem of insufficiency in light quantity in the peripheral area enters from the object into the lens of the camera. In the case where the offset distance between the optical axes of the camera and the stroboscope is a problem, the stroboscope may be formed into a ring-shape to make the optical axes of the stroboscope and the camera coincide.

In the examples described hereinbefore, the light ray distribution adjustment means is so arranged as to produce specific light ray distribution before it enters the lens. However, the light ray distribution adjustment means can also be used to change the light ray distribution after the light has passed through the lens.

According to the present invention as described above, a uniform light ray distribution can be imparted to the light after it has passed through a lens, or the light ray distribution can be changed so as to obtain a uniform light ray distribution after the light has passed through a lens, by using a special non-spherical surface mirror.

INDUSTRIAL APPLICABILITY

The present invention can be utilized in all optical systems which include a lens or lenses.

CLAIMS

1. A light control device in an optical system having a lens and its optical axis, comprising: light ray distribution adjustment means inserted in the optical system in such a manner that a light ray distribution, which is approximately the reciprocal of $\cos^4\theta$, is imparted to the light, where $\theta$ is the angle between the lens optical axis and a light ray passing through the lens.

2. A light control device as claimed in claim 1 in which the light ray distribution adjustment means comprises a non-spherical surface reflection mirror which receives light from a light source and reflects said light as incident light into the lens.

3. A light control device as claimed in claim 1 in which the light ray distribution adjustment means is provided in the path of light after the light has passed through the lens.

FIG. 1

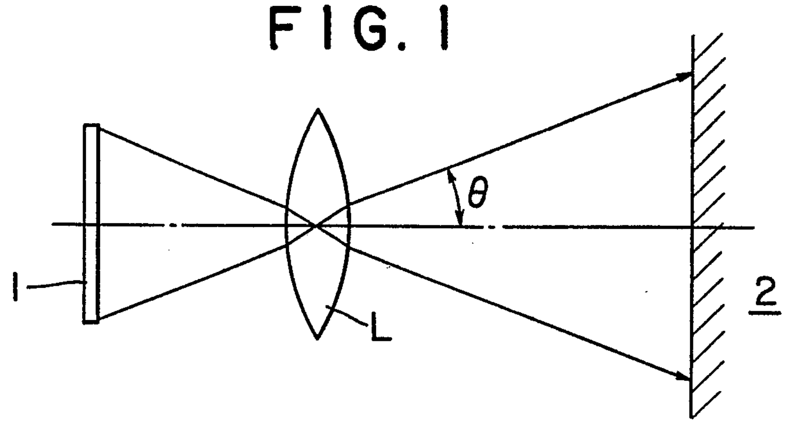


FIG. 2

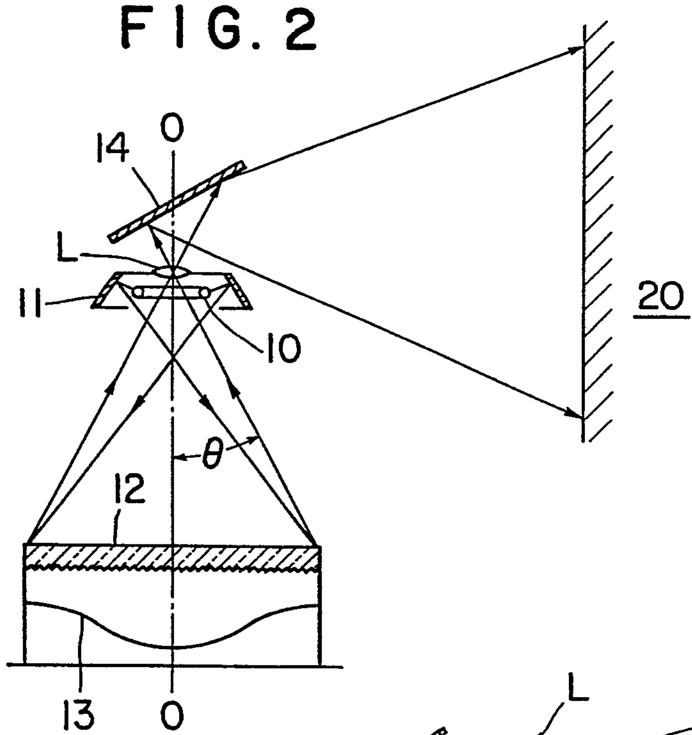


FIG. 3

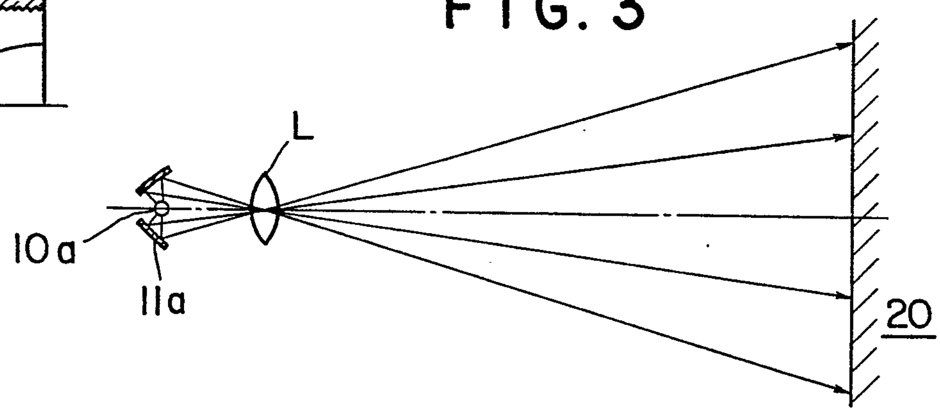


FIG. 4

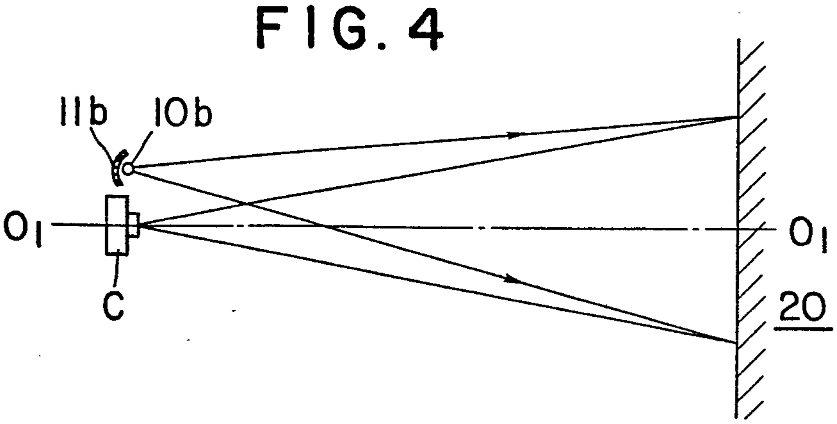

# INTERNATIONAL SEARCH REPORT

International Application No PCT/JP84/00406 0155968

**I. CLASSIFICATION OF SUBJECT MATTER** (if several classification symbols apply, indicate all) [3]

According to International Patent Classification (IPC) or to both National Classification and IPC

Int. $Cl^3$ G02B27/18

**II. FIELDS SEARCHED**

Minimum Documentation Searched [4]

| Classification System | Classification Symbols |
|---|---|
| IPC | G02B27/18, G03B15/03, 21/20, 27/54 |

Documentation Searched other than Minimum Documentation to the Extent that such Documents are Included in the Fields Searched [5]

| | |
|---|---|
| Jitsuyo Shinan Koho | 1926 - 1984 |
| Kokai Jitsuyo Shinan Koho | 1971 - 1984 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| X | US, A, 3,302,515 (Alos AG) 07. February 1967 (07. 02. 67) Column 3, line 34 to column 4, line 24 | 1 |
| X | US, A, 3,830,591 (Eastman Kodak Co.) 20 August 1974 (20. 08. 74) Column 3, line 56 to column 4, line 5 & JP, A, 50-16526 | 1, 2 |
| X | JP, A, 53-148429 (Ricoh Company, Ltd.) 25 December 1978 (25. 12. 78) Page 4, column 1, line 17 to column 2, line 20 | 1, 2 |
| X | JP, Y1, 45-10775 (Fuji Xerox Co., Ltd.) 15 May 1970 (15. 05. 70) Column 2, line 24 to column 3, line 8 | 1, 3 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| November 2, 1984 (02. 11. 84) | November 12, 1984 (12. 11. 84) |
| **International Searching Authority [1]** | **Signature of Authorized Officer [20]** |
| Japanese Patent Office | |